# EUROPEAN PATENT APPLICATION

(11) **EP 2 387 158 A1**
(43) Date of publication of application: **16.11.2011**
(21) Application number: 11165326.7
(22) Date of filing: 09.05.2011
(51) Int. Cl.: H04B 1/10, H04N 5/44

(54) **Receiving device**

(30) Priority: 10.05.2010 JP 2010108735
(71) Applicant: Mitsumi Electric Co., Ltd., Tama-shi, Tokyo 206-8567 (JP)
(72) Inventor: Arata, Torao, Tokyo 206-8567 (JP)
(74) Representative: Maiwald Patentanwalts GmbH

(57) **Abstract**

A receiving device includes a circuit board having mutually opposite first and second surfaces, the circuit board including a tuner mounted on the second surface to receive a digital broadcasting signal, a decoder IC mounted on the first surface to convert an intermediate frequency signal output from the tuner into analog video and audio signals, and a power supply circuit mounted on the first surface to supply a power source voltage to the decoder IC via a power supply path, and a plurality of capacitors mounted on the circuit board and connected in parallel to the power supply path. The plurality of capacitors include first-group capacitors mounted on the first surface and second-group capacitors mounted on the second surface in an area of the circuit board defined by an orthogonal projection of the decoder IC on the first surface onto the second surface.

## Description

### CROSS-REFERENCE TO RELATED APPLICATION

The present application is based upon and claims the benefit of priority of Japanese patent application No. 2010-108735, filed on May 10, 2010, the entire contents of which are incorporated by reference in their entirety.

### BACKGROUND OF THE INVENTION

### 1. Field of the Invention

The present disclosure relates to a receiving device including a circuit board on which a decoder IC (integrated circuit) is mounted to convert, into analog video and audio signals, an IF (intermediate frequency) signal output from a tuner that receives a digital broadcasting signal, and a power supply circuit is mounted to supply a power source voltage to the decoder IC.

### 2. Description of the Related Art

In recent years, a broadcasting format of television broadcasting is shifting from an analog signal format to a digital signal format. With shifting of the broadcasting format, the product of a receiving device which receives a digital broadcasting signal, such as in terrestrial TV broadcasting, and converts the digital broadcasting signal into analog video and audio signals that allow viewing and listening of a broadcasting program on an analog television has been commercially available. Usually, in the receiving device of the above type, a decoder IC to convert a digital broadcasting signal into analog video and audio signals is arranged therein.

For example, Japanese Laid-Open Patent Publication No. 2006-135600 discloses a fundamental composition of a digital terrestrial broadcasting receiving device which includes a tuner circuit part 11, an OFDM (orthogonal frequency division multiplex demodulator) circuit part 12, a video signal processing circuit part 13, and a digital-to-analog video signal conversion circuit part 14.

However, when the above-described receiving device of the comparative example is used, the viewing and listening condition of a broadcasting program on the television is very susceptible to noise that is caused by the power supply path from the power supply circuit to the decoder IC.

### SUMMARY OF THE INVENTION

In one aspect, the present disclosure provides a receiving device which is adapted to be immune to noise that is caused by the power supply path to the decoder IC.

In an embodiment which solves or reduces one or more of the above-mentioned problems, the present disclosure provides a receiving device including: a circuit board having mutually opposite first and second surfaces, the circuit board including a tuner mounted on the second surface to receive a digital broadcasting signal, a decoder IC mounted on the first surface to convert an intermediate frequency signal output from the tuner into analog video and audio signals, and a power supply circuit mounted on the first surface to supply a power source voltage to the decoder IC via a power supply path; and a plurality of capacitors mounted on the circuit board and connected in parallel to the power supply path in the power supply circuit for supplying the power source voltage to the decoder IC, wherein the plurality of capacitors include a first group of capacitors mounted on the first surface of the circuit board on which the decoder IC is mounted, and a second group of capacitors mounted on the second surface of the circuit board in an area which is defined by an orthogonal projection of the decoder IC on the first surface onto the second surface of the circuit board.

Other objects, features and advantages of the present disclosure will be apparent from the following detailed description when read in conjunction with the accompanying drawings.

### BRIEF DESCRIPTION OF THE DRAWINGS

FIG. 1 is an exploded perspective view of a receiving device according to an embodiment of the present disclosure.
Fig. 2 is an exploded perspective view of the receiving device of this embodiment in which a digital circuit board is omitted.
FIG. 3 is a block diagram illustrating the composition of some of components mounted on a digital circuit board in the receiving device of this embodiment.
FIG. 4 is a block diagram illustrating the composition of a decoder IC in the receiving device of this embodiment.
FIG. 5 is a block diagram illustrating the composition of a power supply circuit in the receiving device of this embodiment.
FIG. 6 is a diagram illustrating an example of the circuit layout of a front surface of the digital circuit board on the side of a lid part in the receiving device of this embodiment.
FIG. 7 is a cross-sectional view of the digital circuit board in the receiving device of this embodiment.
FIG. 8A and FIG. 8B are diagrams for explaining results of measurement of noise that is caused by a power supply path in the receiving device of the comparative example and a power supply path in the receiving device of this embodiment.

### DETAILED DESCRIPTION OF PREFERRED EMBODIMENTS

A description will now be given of embodiments of the present disclosure with reference to the accompanying drawings.

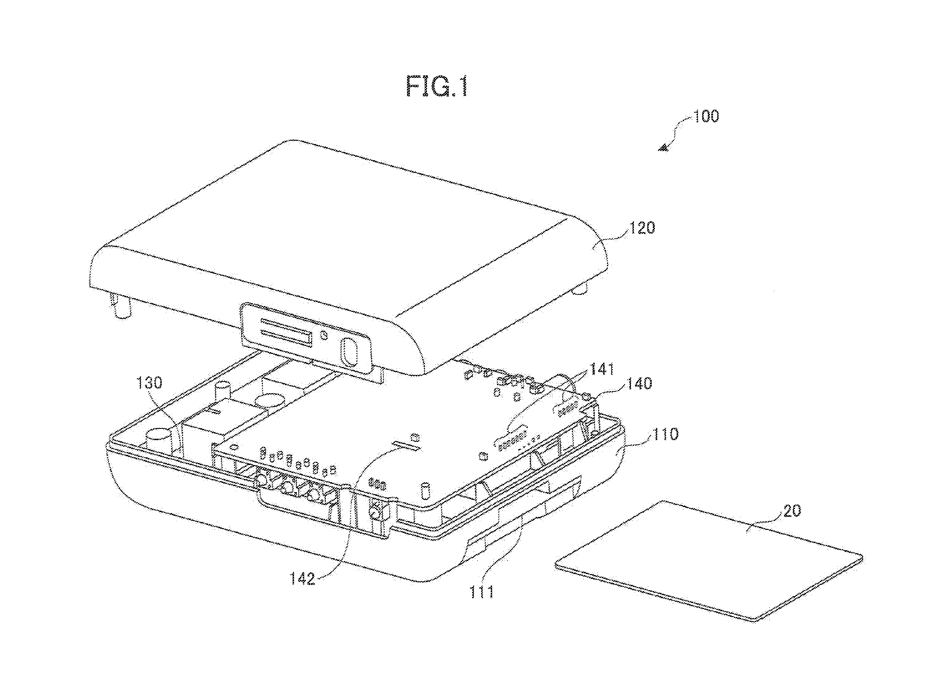

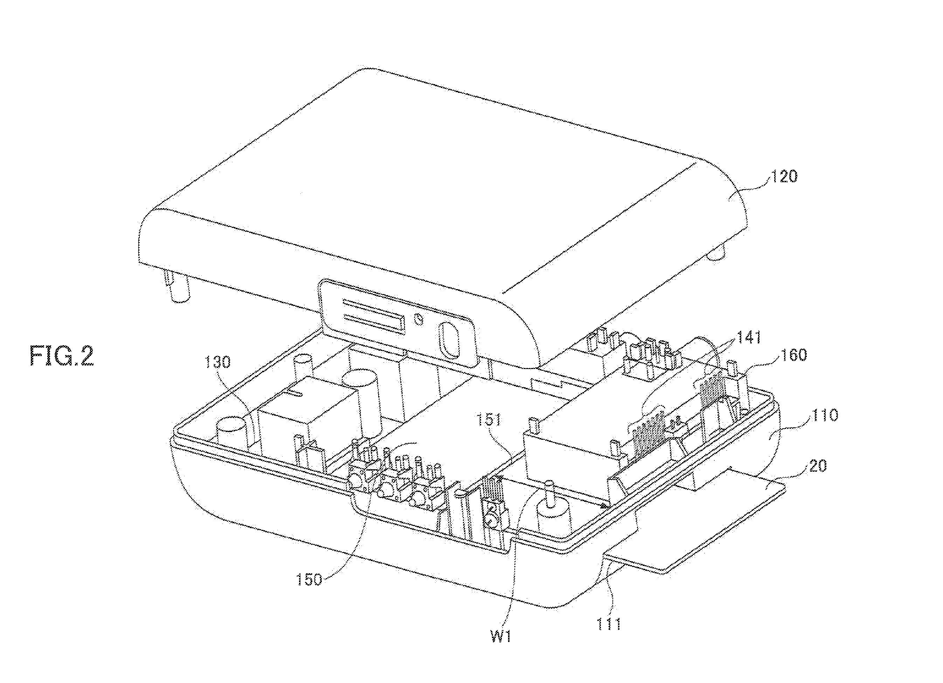

FIG. 1 is an exploded perspective view of a receiving device according to an embodiment of the present disclosure. FIG. 2 is an exploded perspective view of the receiving device of this embodiment in which a digital circuit board is omitted.

As illustrated in FIG. 1, the receiving device 100 of this embodiment is a receiving device for receiving a digital broadcasting signal, such as a set-top box (more specifically, a digital terrestrial TV tuner).

Upon insertion of a contact IC (integrated circuit) card 20, such as a B-CAS (broadcasting satellite conditional access systems) card, the receiving device 100 of this embodiment operates as a receiving device that receives a digital broadcasting signal. An IC chip (which is not illustrated) is mounted on the B-CAS card 20, and a subscriber identification number and a cryptographic key that are uniquely defined per the IC card are stored in the IC chip.

As illustrated in FIG. 1, the receiving device 100 of this embodiment includes a case body 110 and a lid part 120. In the case body 110, a power supply circuit board 130 and a digital circuit board 140 are accommodated. An insertion slot 111 for inserting the B-CAS card 20 is formed in the case body 110. The B-CAS card 20 is inserted into the insertion slot 111 and connected to a B-CAS card connector 150.

The power supply circuit board 130 of this embodiment mainly includes a power supply circuit which is composed of analog circuits, and the B-CAS card connector 150, which are mounted on the power supply circuit board 130. The digital circuit board 140 of this embodiment is a double-sided mounting board. As illustrated in FIG, 6 (which will be described later), various kinds of digital circuits, such as a CPU (central processing unit) and a memory chip, are mounted on the surface of the digital circuit board 140 on the side of the lid part 120. A tuner 160 to receive a digital broadcasting signal is mounted on the surface of the digital circuit board 140 which is opposite to the surface thereof on the side of the lid part 120. Upwardly projecting pins 141 as illustrated in FIG. 1 are respective pins of the tuner 160 as illustrated in FIG. 2.

As illustrated in FIG. 2, in the receiving device 100 of this embodiment, the tuner 160 is arranged between the insertion slot 111 of the case body 110 and a card insertion slot 151 of the B-CAS card connector 150. A length W1 (as indicated in FIG. 2) in the longitudinal direction from the insertion slot 111 of the case body 110 to the card insertion slot 151 of the B-CAS card connector 150 is designed so that the whole B-CAS card 20 can be accommodated in the case body 110 when the B-CAS card 20 is inserted into the B-CAS card connector 150.

In this embodiment, the tuner 160 is disposed in the space between the insertion slot 111 of the case body 110 and the card insertion slot 151 of the B-CAS card connector 150, which space has not been used in the receiving device according to the related art, and the receiving device 100 of this embodiment can be reduced in size.

In this embodiment, the tuner 160 is arranged so that the B-CAS card 20, when the B-CAS card 20 is inserted into the B-CAS card connector 150, may not come in contact with the tuner 160. Specifically, the tuner 160 in this embodiment is arranged so that a back surface of the tuner 160 does not overlap with the insertion slot 111 and the card insertion slot 151 and does not interfere with the path of the B-CAS card 20 in the insertion direction when the B-CAS card 20 is inserted from the insertion slot 111 into the card insertion slot 151. By the arrangement of the tuner 160 in this embodiment, the B-CAS card 20, when inserted, does not interfere with the tuner 160 and can be inserted into the B-CAS card connector 150.

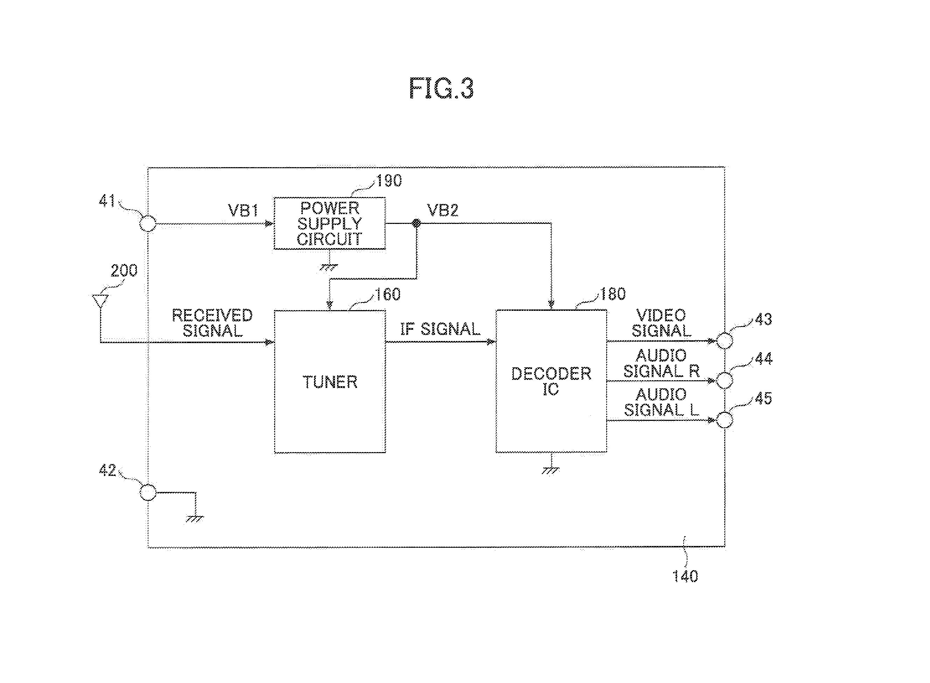

FIG. 3 illustrates the composition of some of the components mounted on the digital circuit board 140 in the receiving device of this embodiment. On the digital circuit board 140, the tuner 160, the decoder IC 180, and the power supply circuit 190 are mounted in this embodiment. Alternatively, the tuner 160 may not be mounted on the digital circuit board 140 and may be supported by another supporting member. For example, the tuner 160 may be mounted on the power supply circuit board 130 illustrated in FIG. 1 and FIG. 2.

A digital broadcasting signal is input to the tuner 160 via an antenna 200 or a cable circuit which is connected to the receiving device 100. A frequency conversion part of the tuner 160 performs frequency conversion of the input digital broadcasting signal into an intermediate frequency signal (IF signal) which carries an intermediate frequency corresponding to the frequency of the signal components of a selected channel subjected to the viewing and listening of the selected program on the TV. The selection of a receiving channel in the tuner 160 is input by a user based on the selectable channel information output from a user input device (not illustrated), such as a remote control or a touch panel display, which is operable by the user to select the receiving channel. Once the channel selection operation is performed by the user on the user input device (not illustrated), the tuner 160 performs the tuning of the intermediate frequency of the IF signal to the frequency corresponding to the frequency of the selected channel which is indicated by the output signal of the user input device.

The decoder IC 180 is an integrated circuit which converts, into the analog composite video and audio signals, the IF signal output from the tuner 160 whose frequency is tuned up by the tuner 160. The video and audio signals from the decoder IC 180 are respectively output from the RCA terminals (or the output terminals 43-45) mounted on the digital circuit board 140.

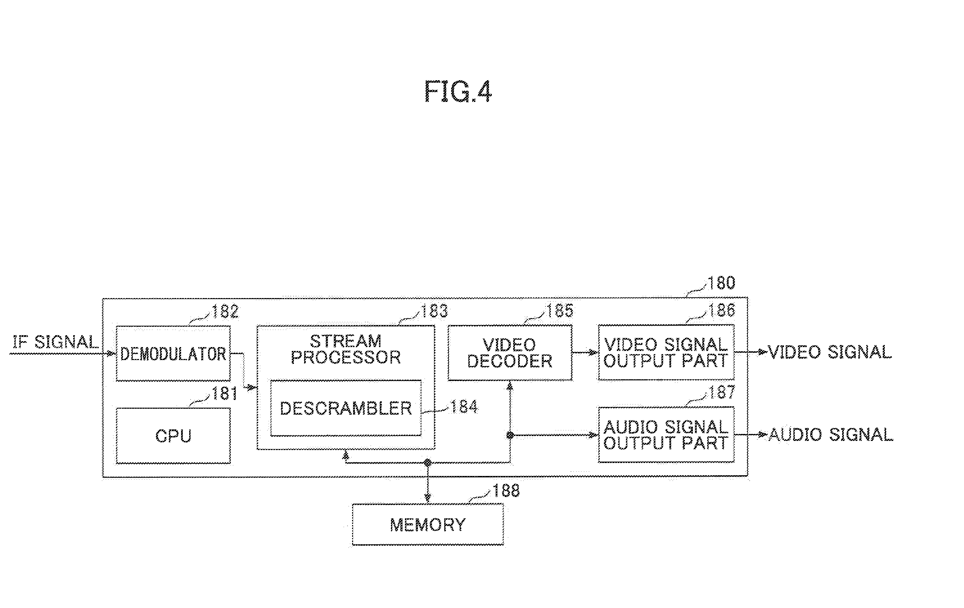

FIG. 4 is a block diagram illustrating the composition of the decoder IC 180 in the receiving device of this embodiment. The processing in the decoder IC 180 is performed by a CPU 181. A demodulator 182 performs demodulation of the IF signal of the digital broadcasting signal of OFDM (Orthogonal Frequency Division Multiplexing) whose frequency is tuned up by the tuner 160, and generates a TS stream of MPEG 2-TS by the demodulation. The TS stream of MPEG 2-TS from the demodulator 182 is supplied to a descrambler 184 of Multi-2 system provided in a stream processor 183. The manipulations on the TS stream performed by the scrambler of the transmitting module (not illustrated) are reversed by the descrambler 184, and the TS stream output from the descrambler 184 is stored in a memory 188, such as a hard disk.

The video packet separated from the TS stream which is read from the memory 188 is supplied to a video decoder 185. The video decoder 185 decodes the video packet into video data and supplies the video data to a video signal output part 186. The video signal output part 186 converts the decoded video data into an analog video signal and outputs the video signal (video out). Similarly, an audio decoder (not illustrated) decodes audio information from the audio packet separated from the TS stream which is read from the memory 188 and supplies the audio information to an audio signal output part 187. The audio signal output unit 187 converts the audio information into an analog audio signal and outputs the audio signal (audio out).

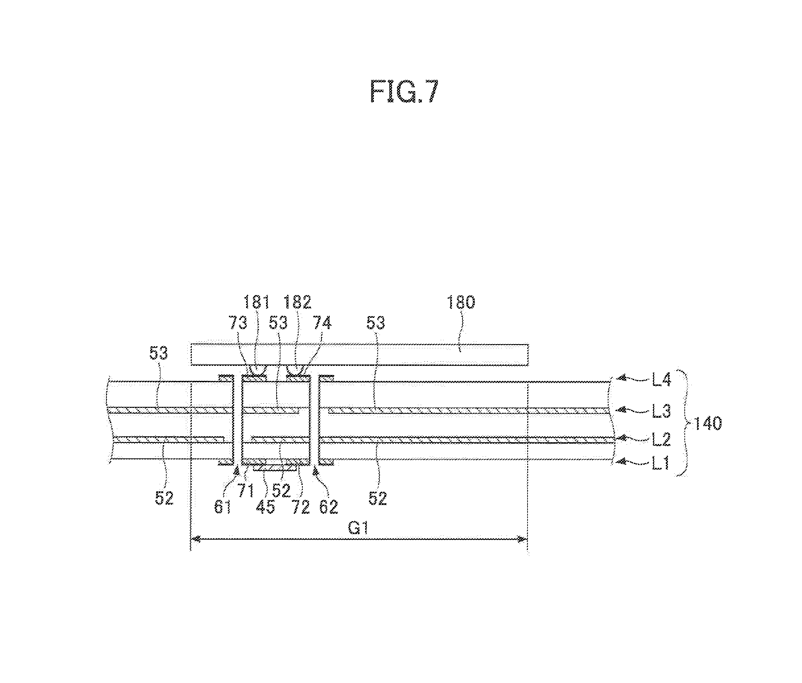

Referring back to FIG. 3, the power supply circuit 190 will be described. The power supply circuit 190 supplies a power source voltage VB2 to each of the decoder IC 180 and the tuner 160. The power source voltage VB2 is a voltage on the basis of the potential of a ground layer 52 (as indicated in FIG. 7) which is equal to the potential of a ground terminal 44 of the digital circuit board 140. The power supply circuit 190 is a DC-DC converter which generates a constant DC power source voltage VB2 (for example, 1V) based on the DC power source voltage VB1 (for example, 6V) received from the power supply terminal 41 of the digital circuit board 140. The DC power source voltage VB1 is, for example, the voltage generated from the commercial AC power supply by the AC-DC converter of the power supply circuit board 130.

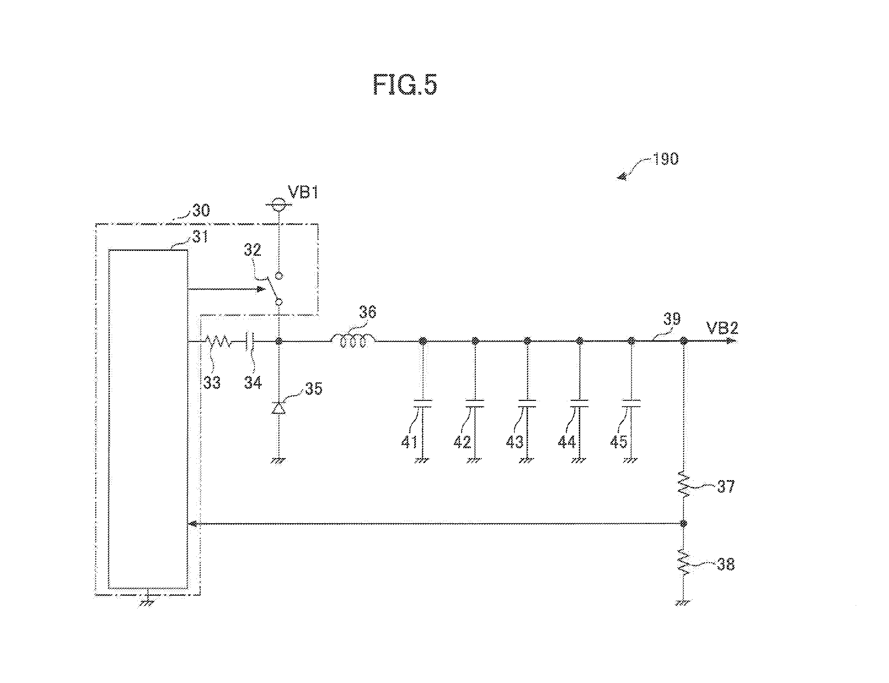

FIG. 5 is a block diagram illustrating the composition of the power supply circuit 190 in the receiving device of this embodiment. The power supply circuit 190 functions as a voltage-lowering switching regulator on the basis of the potential (ground) of the ground layer 52 of the digital circuit board 140. As illustrated in FIG. 5, the power supply circuit 190 includes the following components mounted on the digital circuit board 140. A driver part 31 outputs a PWM (pulse-width modulation) signal. A semiconductor switch 32 has one end on its high voltage side connected to the power source voltage VB1. A resistor 33 is connected between the driver part 31 and a capacitor 34. A diode 35 is connected between the ground and the other end of the semiconductor switch 32. An inductor 36 has one end connected to the cathode of the diode 35. A power supply path 39 is connected to the other end of the inductor 36. The power supply circuit 190 includes a plurality of capacitors 41-45 which are mutually connected in parallel to the power supply path 39. A voltage divider (resistors 37, 38) is provided to detect the power source voltage VB2 and feeds the power source voltage VB2 back to the input of the driver part 31. The semiconductor switch 32 and the driver part 31 (which is composed of a logic circuit or the like) are integrated into a power-supply control IC 30.

The semiconductor switch 32 is constituted by, for example, a p-channel MOSFET (metal-oxide semiconductor field-effect transistor). The five capacitors 41-45 are provided as output capacitors for smoothing the power source voltage VB2 supplied on the power supply path 39. The operation of the power supply circuit 190 as a voltage-lowering switching regulator is well known in the art, and a description thereof will be omitted for the sake of convenience.

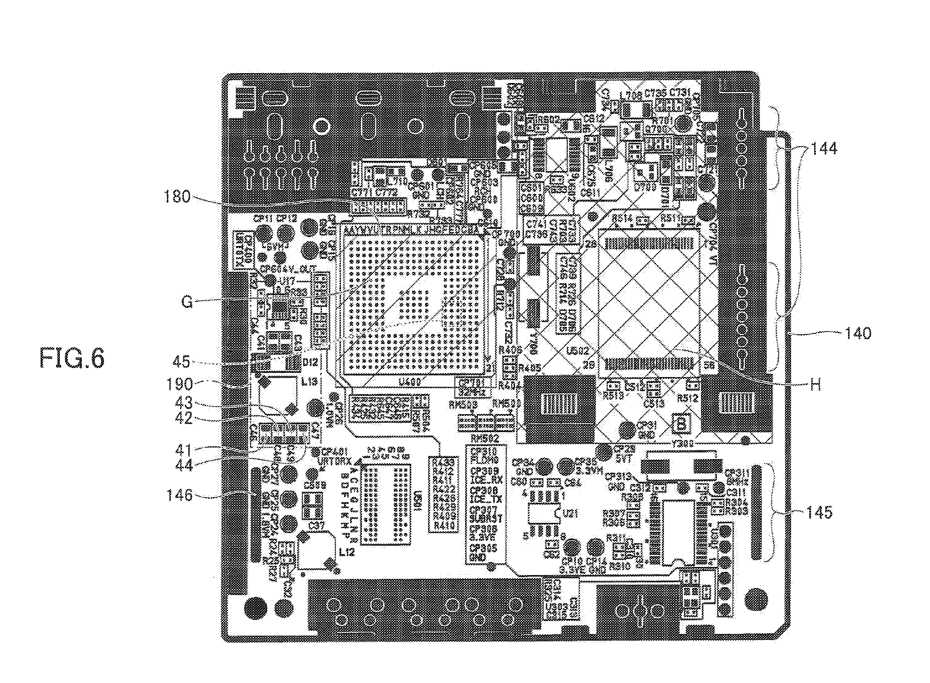

FIG. 6 is a diagram illustrating an example of the circuit layout of a front surface of the digital circuit board 140 on the side of the lid part 120.

In the digital circuit board 140 of this embodiment, the tuner 160 is mounted on a back surface (second surface) of the digital circuit board 140 which is opposite to the front surface (first surface) of the digital circuit board 140 on the side of the lid part 120 as illustrated in FIG. 6.

The power supply circuit 190 is arranged around the periphery of the decoder IC 180 so that the power supply path 39 has a length between the inductor 36 of the power supply circuit 190 and the input of the decoder IC 180 which makes the noise level of the power supply path 39 lower than a required noise level. By this composition, it is possible to reduce the noise that is caused by the power supply path 39 connected to the decoder IC 180, and it is possible to maintain the viewing and listening condition of a broadcasting program on the TV which is immune to the noise.

In this embodiment, except for the capacitor 45, the components of the power supply circuit 190 as illustrated in FIG. 5 are mounted on the first surface of the digital circuit board 140 where the decoder IC 180 is mounted. In this embodiment, the components of the power supply circuit 190 are divided into a first group of components mounted on the first surface of the digital circuit board 140 and a second group of components mounted on the second surface of the digital circuit board 140. Among the capacitors 41-45 of the power supply circuit 190 connected to the positive terminal (the input) of the decoder IC 180, the four capacitors 41-44 belong to the first group and are mounted on the first surface of the digital circuit board 140, and the capacitor 45 belongs to the second group and is mounted on the second surface of the digital circuit board 140. Specifically, the capacitor 45 mounted on the second surface of the digital circuit board 140 is disposed in an area G (as indicated in FIG. 6) of the back surface of the digital circuit board 140, which area is defined by orthogonal projection of the decoder IC 180 onto the back surface of the digital circuit board 140. More specifically, the area G where the capacitor 45 is mounted on the back surface of the digital circuit board 140 is defined by orthogonally projecting points on the back surface of the decoder IC 180 onto points on the back surface of the digital circuit board 140 by parallel lines drawn perpendicular to the back surface of the digital circuit board 140.

In this embodiment, the capacitor 45 among the capacitors 41-45 connected to the positive terminal of the decoder IC 180 is mounted on the second surface (the back surface) of the digital circuit board 140 (the area G where the capacitor 45 is mounted corresponds to the back of the decoder IC 180), and the length of the power supply path 39 between the capacitor 45 and the positive terminal of the decoder IC 180 can be shortened from when the capacitor 45 is counted on the first surface (the front surface) of the digital circuit board 140 where the decoder IC 180 is mounted. When the capacitor 45 is disposed in the area G of the second surface of the digital circuit board 140, the length of the power supply path 39 between the capacitor 45 and the positive terminal of the decoder IC 180 can be made approximately equal to the thickness of the digital circuit board 140. On the other hand, when the capacitor 45 is mounted on the first surface of the digital circuit board 140, the length of the power supply path 39 between the capacitor 45 and the positive terminal of the decoder IC 180 will have to be larger than the thickness of the digital circuit board 140 because mounting of the components is inhibited in a predetermined portion around the periphery of the decoder IC 180 on the first surface of the digital circuit board 140 and the power supply path 39 from the capacitor 45 must be routed to the positive terminal of the decoder IC 180 so as to bypass the predetermined portion.

Thus, in the receiving device of this embodiment, the length of the power supply path 39 between the capacitor 45 (which is provided for smoothing the power source voltage VB2) and the positive terminal of the decoder IC 180 can be shortened, and the receiving device of this embodiment can be immune to noise that is caused by the power supply path 39 between the capacitor 45 and the positive terminal of the decoder IC 180. Even if noise is carried in the power supply path 39, the noise is attenuated by the capacitor 45 before being supplied to the input of the decode IC 180. Thus, the viewing and listening condition of a broadcasting program on the TV which is immune to the noise can be maintained.

Alternatively, two or more capacitors among the capacitors in the power supply circuit 190 connected to the positive terminal of the decoder IC 180 may be disposed in the area G of the back surface of the digital circuit board 140 such that the whole outline of the two or more capacitors may be included in the area G or may overlap with the area G.

In this embodiment, the tuner 160 is arranged so that a side of the tuner 160 having the various pins 141 projecting thereon may be located at an end portion of the digital circuit board 140. As illustrated in FIG. 6, through holes 144 for receiving the pins 141 of the tuner 160 are formed in the end portion of the digital circuit board 140. The pins 141 are inserted in the through holes 144, and the tuner 160 is mounted on the digital circuit board 140.

In this embodiment, the side of the tuner 160 with the various pins 141 is located at the end portion of the digital circuit board 140, and it is possible to prevent formation of the through holes 144 near the central part of the digital circuit board 140. Therefore, in the digital circuit board 140 of this embodiment, it is possible to mount an IC, which is connected to various signal lines, in an area H (as indicated in FIG. 6) of the front surface of the digital circuit board 140 on the back of the area where the tuner 160 is mounted. It is possible to increase the circuit density of the digital circuit board 140 provided in the receiving device of this embodiment.

In this embodiment, the tuner 160 is mounted on the digital circuit board 140, and the video signal line around the periphery of the tuner 160 is also wired on the digital circuit board 140. It is possible to reduce the noise contained in the video signal. It is possible to reduce the number of signal lines needed to connect the power supply circuit board 130 and the digital circuit board 140, and it is possible to reduce the number of pins formed in the connector to connect the power supply circuit board 130 and the digital circuit board 140.

FIG. 7 is a cross-sectional view of the digital circuit board 140 in the receiving device of this embodiment. As illustrated in FIG. 7, the digital circuit board 140 is a multilayer printed circuit board containing four laminate layers: a first layer L1, a second layer L2, a third layer L3, and a fourth layer L4. The first surface of the digital circuit board 140 described above is constituted by the fourth layer L4. The second surface of the digital circuit board 140 described above is constituted by the first layer L1. In the third layer L3, a power supply layer 53 for supplying the power source voltage VB2 is formed. Alternatively, a power supply layer for supplying the power source voltage VB1 may be formed in the third layer L3.

In the second layer L2 of the digital circuit board 140 illustrated in FIG. 7, a ground layer 52 is formed.

In FIG. 7, G1 denotes a length of one side of the square-shaped area G of the digital circuit board 140 (or a length of one side of the decoder IC 180 in the shape of a square). As illustrated in FIG. 7, the capacitor 45 is arranged in the area G of the first layer L1.

The positive terminal 181 of the decoder IC 180 is connected to each of the power supply layer 53 formed in the third layer L3 of the digital circuit board 140 and one electrode of the capacitor 45 via a first through hole 61 which penetrates the digital circuit board 140. An electrically conductive material is plated onto the internal surface of the first through hole 61. The first through hole 61 is electrically insulated from the ground layer 52 but electrically connected to the power supply layer 53. The electrode of the capacitor 45 is soldered to a land 71 of the first layer L1 connected to the through hole 61.

The negative terminal 182 of the decoder IC 180 is connected to each of the ground layer 52 formed in the second layer L2 of the digital circuit board 140 and the other electrode of the capacitor 45 via a second through hole 62 which penetrates the digital circuit board 140. An electrically conductive material is plated onto the internal surface of the second through hole 62. The second through hole 62 is electrically insulated from the power supply layer 53 but electrically connected to the ground layer 52. The other electrode of the capacitor 45 is soldered to a land 72 of the first layer L1 connected to the through hole 62.

In this manner, the terminals 181 and 182 of the decoder IC 180 and the capacitor 45 are connected together by the through holes 61 and 62 which are perpendicular to the mounting surface of the digital circuit board 140. Hence, the length of the power supply path between the terminals 181,182 and the capacitor 45 can be shortened, and the receiving device of this embodiment can be immune to noise that is caused by the power supply path. Accordingly, the viewing and listening condition of a broadcasting program on the TV can be made to be immune to the noise.

It is preferred that a BOA (ball grid array) package is used as a surface-mounted device package of the decoder IC 180 of this embodiment. When a BGA package is used, the noise carried in the power supply path between the positive and negative terminals of the decoder IC and the capacitor mounted on the second surface can be reduced. The terminals 181 and 182 of the decoder IC illustrated in FIG. 7 correspond to the bumps of the BGA package in such a case. By using the BGA package, the length of the power supply path between the capacitor mounted on the second surface and the terminals 181 and 182 of the decoder IC can be remarkably reduced from that in the cases of other surface-mounted device packages, such as a SOP (small outline package) and a QFP (quad flat package).

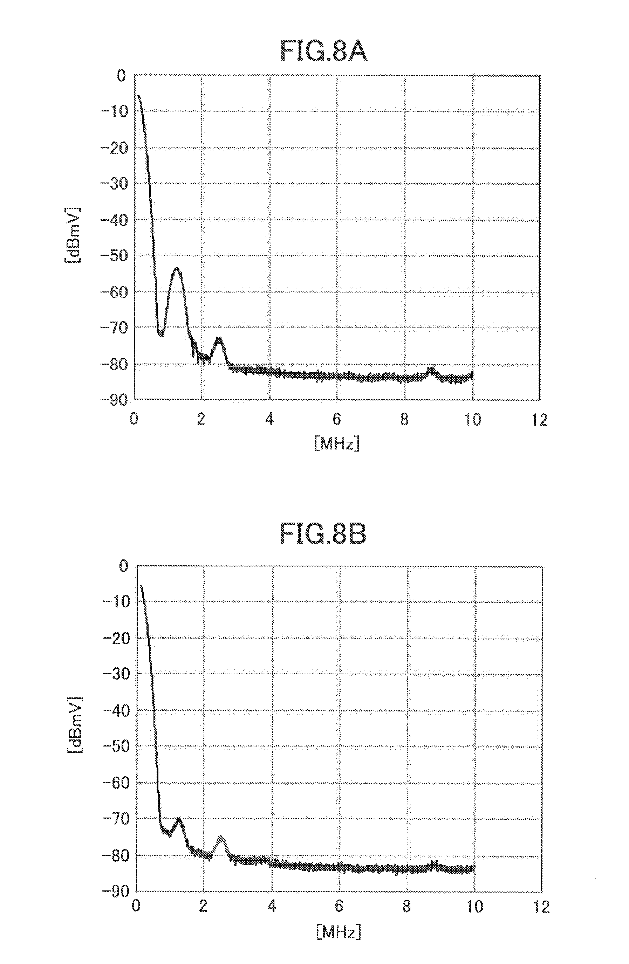

FIG. 8A and FIG. BB show the results of measurement of noise which is caused by the power supply path in the receiving device of the comparative example and the power supply path in the receiving device of this embodiment. By using a known spectrum analyzer, the level of noise caused by the power supply path between the lands where the two electrodes of the output capacitor connected to the power supply path are mounted is measured for each of the comparative example and this embodiment.

FIG. 8A shows the results of measurement of the level of noise caused by the power supply path in the power supply circuit of the comparative example. The composition of the power supply circuit of the comparative example is essentially the same as the composition of the power supply circuit of this embodiment illustrated in FIG. 5 except for one alternative capacitor (which is substituted for the plural capacitors 41-45 of this embodiment including the capacitor 45) in the power supply circuit of the comparative example is mounted on the first surface (the front surface) of the digital circuit board 140 where the decoder IC 180 is mounted.

On the other hand, FIG. 8B shows the results of measurements of the level of noise caused by the power supply path in the power supply circuit of this embodiment as illustrated in FIGs. 5-7. Namely, the capacitor 45 in this embodiment is mounted on the second surface (the back surface) of the digital circuit board 140 in the area G thereof, rather than on the first surface of the digital circuit board 140.

The capacitance (= 100 micro F) of the alternative capacitor in the case of FIG. 8A is made approximately equal to the total capacitance (= 98 micro F) of the five capacitors 41-45 of FIG. 8B which is the sum of each capacitance (= 22 micro F) of the four capacitors 41-44 and the capacitance (= 10 micro F) of the capacitor 45. All the capacitors used in the cases of FIG. 8A and FIG. 8B are surface-mounted device (SMD) type ceramic capacitors. As is apparent from FIG. 8A and FIG. 8B, the level of noise of the frequency components contained in the frequency band from 0.8 MHz to 2 MHz can be remarkably reduced according to this embodiment in spite of the increase of the circuit density of the digital circuit board 140 provided in the receiving device of this embodiment from that in the receiving device according to the related art.

As described in the foregoing, according to the present disclosure, it is possible to provide a receiving device which is immune to noise that is caused by a power supply path to a decoder IC.

The present disclosure is not limited to the above-described embodiments, and variations and modifications may be made without departing from the scope of the present disclosure.

For example, a surface-mounted device package of the decoder IC 180 in which some of the capacitors are arranged as described in the foregoing embodiment is not limited to a BGA package, and other surface-mounted device packages, such as a SOP and a QFP, may be used instead, so that the advantage of noise reduction similar to that in the foregoing embodiment can be obtained. In the foregoing embodiment, the single output capacitor 45 is mounted on the second surface of the digital circuit board 140. Alternatively, two or more output capacitors may be mounted on the second surface of the digital circuit board 140 so that the advantage of noise reduction similar to that in the foregoing embodiment can be obtained. The number of the output capacitors in the power supply circuit 190 is not limited to five in the foregoing embodiment, and the number of the output capacitors may be determined according to the level of noise actually present in the power supply path.

## Claims

1. A receiving device comprising:
a circuit board (140) having mutually opposite first and second surfaces, the circuit board including a tuner (160) mounted on the second surface to receive a digital broadcasting signal, a decoder IC (180) mounted on the first surface to convert an intermediate frequency signal output from the tuner into analog video and audio signals, and a power supply circuit (190) mounted on the first surface to supply a power source voltage to the decoder IC via a power supply path (39); and
a plurality of capacitors (41 to 45) mounted on the circuit board and connected in parallel to the power supply path in the power supply circuit for supplying the power source voltage to the decoder IC,
the plurality of capacitors comprising:
a first group of capacitors (41 to 44) mounted on the first surface of the circuit board on which the decoder IC is mounted; and
a second group of capacitors (45) mounted on the second surface of the circuit board in an area (G) which is defined by an orthogonal projection of the decoder IC on the first surface onto the second surface of the circuit board.

2. The receiving device according to claim 1, wherein a positive terminal (181) of the decoder IC (180) is connected to each of a power supply layer (53) of the circuit board and one of electrodes of a capacitor (45) of the second group of capacitors via a first through hole (61) of the circuit board (140), and a negative terminal (182) of the decoder IC (180) is connected to each of a ground layer (52) of the circuit board (140) and the other of the electrodes of the capacitor (45) of the second group of capacitors via a second through hole (62) of the circuit board.

3. The receiving device according to claim 1, wherein a package in which the decoder IC (180) is arranged is constituted by a BOA package.

4. The receiving device according to claim 1, wherein the second group of capacitors are constituted by one capacitor (45) among the plurality of capacitors (41 to 45).
